Europäisches Patentamt

(19) European Patent Office

Office européen des brevets

(11) Publication number: **0 428 524 B1**

(12) EUROPEAN PATENT SPECIFICATION

(45) Date of publication of patent specification: **06.10.93**  (51) Int. Cl.⁵: **G01K 17/06**

(21) Application number: **89906343.2**

(22) Date of filing: **18.05.89**

(86) International application number:
**PCT/DK89/00131**

(87) International publication number:
**WO 89/11639 (30.11.89 89/28)**

(54) **WARM WATER CONSUMPTION METER.**

(30) Priority: **19.05.88 DK 2752/88**

(43) Date of publication of application:
**29.05.91 Bulletin  91/22**

(45) Publication of the grant of the patent:
**06.10.93 Bulletin  93/40**

(84) Designated Contracting States:
**AT BE CH DE FR GB IT LI LU NL SE**

(56) References cited:
**DE-A- 2 942 125**
**US-A- 4 538 925**
**US-A- 4 575 262**

(73) Proprietor: **BRUNATA A/S**
**Vibevej 26**
**DK-2400 Copenhagen NV(DK)**

(72) Inventor: **HANSEN, Jens, Peter, Fischer**
**stre Pennehavevej 25**
**DK-2960 Rungsted Kyst(DK)**

(74) Representative: **Hoest-Madsen, Knud et al**
**c/o Lehmann & Ree**
**Grundtvigsvej 37**
**DK-1864 Frederiksberg C (DK)**

## Description

The invention relates to a warm water consumption meter, whereby is to be understood a meter capable of registering a heat consumption figure representative of the quantity of energy that has been consumed for the heating of water flowing past a measuring location in a warm water conduit. The meter is of the kind comprising a measuring body which is so connected with a warm water conduit that when warm water flows through the warm water conduit different temperatures will occur in different points of the measuring body, said temperatures being sensed by means of thermosensors and being applied to a microprocessor for calculating a heat consumption figure.

A meter of the kind referred to is known from U.S. patent No. 4,538,925. This known meter comprises a solid measuring body, which may be composed of a plurality of parts, and in which a passage is provided for a forward flow of water on which metering is to be carried out. The said flow of water is, through the solid measuring body, in heat exchange communication either with a return flow through a passage in the measuring body, or with the outer surroundings. In the measuring body built-in thermosensors are provided for sensing the temperature gradient in the interior of the measuring body. Moreover, thermosensors are provided in the inlet and the outlet of the forward flow passage and in the outlet of the return flow passage, if this is provided. If not, a fixed reference temperature is used in the calculation of the heat consumption figure instead of the outlet temperature of the return flow.

If it is attempted to use the known meter for a warm water conduit with intermittent tap-off of warm water, frequently with long intervals, such as is normal for a consumer connected to a central warm water supply system, the temperatures sensed by the thermosensors will at the commencement and termination of each tap-off assume the temperature values characteristic of the tap-off condition only at a considerable time lag, and one therefore cannot expect to obtain a metering result which is reasonably representative of the quantity of heat consumed.

It is the object of the invention to construct a meter of the kind referred to in such a manner as to obtain a very satisfactorily representative metering result for a normal tap-off pattern. To achieve this object, according to the invention, the measuring body comprises a calorimeter, which is connected in a by-pass conduit branched off from the warm water conduit so as to establish a by-pass flow of water through the calorimeter proportional to the main flow in the warm water conduit, and is provided with a first sensor sensing the water temperature of the water flowing to the calorimeter, and a second sensor sensing the calorimeter temperature at a point of the wall of the calorimeter, and the microprocessor comprises a calculator (in the following referred to as the first calculator) which is adapted, in response to an increase of the calorimeter temperature from a starting value to a stop value, followed by a drop of temperature or temperature stagnation, to calculate a counting increment from the starting value of the calorimeter temperature, the stop value of the calorimeter temperature, and the water temperature, and to transfer that increment to a counter, the by-pass conduit and the calorimeter being so dimensioned that when a quantity of water less than a predetermined quantity limit flows through the warm water conduit, the calorimeter temperature will not come to a point of stagnation, the quantity limit being preferably so selected that it cannot be expected to be exceeded at a normal t ap-off pattern of a consumer.

The invention is based on the recognition that when a given quantity of water passes through the calorimeter at a given temperature, the increase of the calorimeter temperature will be a determinate function of the quantity of water flowing through the calorimeter (which is proportional to the quantity of water that has passed through the water conduit), whence, conversely, the quantity of water that has passed through the water conduit during a tap-off, in which the quantity limit is not exceeded, can be calculated determinately from the increase of the calorimeter temperature in conjunction with the water temperature.

It can therefore be expected that the major proportion of the warm water consumption of each consumer will be recorded by the said first calculator, which renders a determinate measurement of the tapped-off quantity of water and the corresponding heat consumption. For surveying the calorimeter temperature and the water temperature the microprocessor may advantageously comprise a sampler which is adapted to sample the sensed temperatures at a predetermined rhythm and to enter these temperatures temporarily and exchangeably in a memory and to transfer data from the memory and from the sensors to said first calculator in accordance with a program recorded in the microprocessor.

Owing to the heat inertia of the calorimeter a representative metering result can be obtained with employment of a low sampling frequency, e.g. one sampling per minute, whereby the use of battery current is minimized, and the lifetime of the battery is correspondingly prolonged.

However, situations may occur where the above mentioned quantity limit is exceeded, e.g. if a consumer forgets to close a warm water faucet or performs very large tap-offs in rapid succession.

The microprocessor may therefore advantageously further comprise a second calculator which is adapted, at stagnating calorimeter temperature following a rise of that temperature, to calculate a counting increment for each sampling period from the calorimeter temperature, the water temperature and the ambient temperature. The counting increment from the second calculator, too, is in principle representative of the tapped-off quantity of water and the thermal energy consumed, but the measurement involves a greater uncertainty than the measurement by means of the first calculator. This must be considered acceptable, since the situations referred to normally cannot be expected to occur, and the main point is that through the counting in the second calculator the consumers are warned that carelessness in the consumption of warm water will be sanctioned by a penalty.

Advantageously, stagnation of the calorimeter temperature can be used as a criterion for the shifting-over between the two calculators, viz. by arranging for the microprocessor to shift from the first to the second calculator at stagnation of the calorimeter temperature following a rise, and to shift back to the first calculator when the calorimeter temperature rises following a stagnation or a drop. In the case of a sampling period of 1 minute, as suggested above by way of example, stagnation of the calorimeter temperature may be defined to mean that from one sampling to the next sampling the calorimeter temperature neither rises nor drops by more than e.g. 0.2 °C.

Situations may also occur where a tap-off is performed of a duration so short, that within a sampling interval the calorimeter does not rise measurably, or at least not beyond the stagnation limit, though there has been a substantial rise of the water temperature. This may e.g. occur when warm water is tapped off for a quick handwash.

If in such a situation the calorimeter temperature does not even within the next sampling interval rise above the stagnation limit relative to the value at the commencement of the preceding interval, no heat consumption will be registered for the short-time tap-off.

In order to make it possible to register a consumption also for short-time tap-offs, it is proposed, according to an embodiment of the invention, that the microprocessor further comprises a third calculator which is adapted, for a sampling period with increase of the water temperature beyond a predetermined threshold of increase, but stagnating calorimeter temperature, to calculate a counting increment depending only on the water temperature.

Particularly with a view to such short-time tap-offs it is desirable that increases of the water temperature should be registered as promptly as possible, and in order to achieve this it is proposed, according to a further embodiment of the invention, to arrange the first sensor in heat conducting contact with the main flow in or adjacent the region in which the by-pass flow is branched off. Hereby the advantage is obtained that a sudden increase of the water temperature does not escape registration, even if it does not, in the course of a sampling period, propagate far enough along the by-pass passage to reach the inlet of the calorimeter.

In the counting in the second calculator the temperature of the surroundings is included in the determination of the counting increment. It would, however, be inconvenient to measure the temperature of the surroundings directly, because a sensor for such a measurement cannot be mounted inside the housing of the meter. As will be explained later, it is possible to perform a simulated measurement of the temperature of the surroundings on the basis of the fact that the calorimeter temperature will become equal to the temperature of the surroundings when no water is tapped off.

Another possibility of determining the temperature of the surroundings can be obtained by constructing the meter with a third temperature sensor for sensing a reference temperature representative of the ambient temperature, said third temperature sensor being arranged at a distance from the calorimeter inside an outer enclosure covering the front side of the calorimeter.

Advantageously, the microprocessor, too, can be arranged inside the said enclosure, so that the meter in its entirety will constitute a completely closed unit that can be provided with a seal against unauthorized access. This of course does not prevent the provision of a display, visible from the exterior, showing the metering result.

According to the invention, the calorimeter may advantageously be arranged in such a manner as to be heat insulated from the warm water conduit, the walls of the by-pass passages connecting the calorimeter with the warm water conduit likewise consisting of heat insulating material. Thereby, metering errors resulting from direct heat transfer from the water conduit to the meter are prevented.

The invention will in the following be described in further detail with reference to the drawings, in which

Fig. 1 is a side view of a warm water conduit with a faucet, and a warm water consumption meter according to an embodiment of the invention mounted on the conduit,

Fig. 2 is a horizontal section through the meter along the broken line II-II in Fig. 1,

Fig. 3 is a vertical section through the meter along the broken line III-III in Fig. 2,

3

Fig. 4 is a section corresponding to Fig. 2 through a modified embodiment of the meter,

Fig. 5 is a section corresponding to Fig. 3 through the same modified embodiment of the meter,

Fig. 6 is a block schematic diagram symbolically illustrating the electronic modular build-up of a microprocessor built into the meter, in accordance with an embodiment of the invention,

Figs. 7 and 8, when placed side by side, are a flow chart illustrating the logical build-up of the programmed control of a sampling cycle of the microprocessor, in accordance with an embodiment of the invention with two calculators, and

Figs. 9 and 10, when placed side by side with Fig. 7, are a corresponding flow-chart for an embodiment with three calculators.

In the drawing, 1 is a warm water conduit with a tap-off faucet 2. A Venturi tube 3 having a narrowed section 4 is built into the conduit. The Venturi tube 3 is provided on one side with a thickened wall portion 5 having two bores 6 and 7 opening into the Venturi tube 3 on opposite sides of the narrowed section 4. At the opening of the bore 7 a diaphragm 8 is provided, which in known manner serves to establish proportionality between a by-pass flow branched off by means of the Venturi tube, and the main flow through the conduit 1.

A socket 9 of insulating material for receiving the meter is mounted on the wall portion 5 of the Venturi tube 3. The meter comprises a calorimeter 10 and an outer housing 11. In the embodiment illustrated the calorimeter is constructed as a flat rectangular container having a rear wall 12, a front wall 13, a bottom wall 14, two side walls 15, 16 and a top wall 17. The calorimeter is made from a material of high heat conductivity. On the calorimeter two tubes 18 and 19 are mounted which extend rearwardly and, when mounting the meter in the socket 9, are pushed into the bores 6 and 7 in sealing contact therewith. The tubes 18 and 19 consist of insulating material, preferably Teflon, so that they are protected against deposition of lime or other sedimentable substances. For the same reason the inner walls of the calorimeter may be coated with Teflon.

The tube 18 is received in a sleeve 20 of insulating material extending from the rear wall to the front wall of the calorimeter. From the said sleeve an inlet tube 21 is branched off which extends downwards to the vicinity of the bottom wall 14. In the front end of the sleeve 20 a cap 22 of highly heat conductive material is inserted, which is insulated from the calorimeter wall. The cap serves to receive the end of a first temperature sensor 23, which is in highly heat conductive connection with the cap 22.

The tube 19 opens on the inner side of the rear wall 12 immediately adjacent the tube 18.

In the front wall 13 of the calorimeter there is provided a depression 24 serving to receive a second temperature sensor 25 in good heat conducting connection with the calorimeter wall.

The outer housing 11 is separated from the calorimeter by an insulating wall 26. In the outer housing there is mounted an electronic unit 27 from which the sensors 23 and 25 extend through the wall 26 into the cap 22 and the depression 24, respectively. On the electronic unit 27 there may be mounted a third sensor 28 for a reference temperature which is representative of the temperature of the surroundings, as will be explained later.

In the outer housing there is finally provided a long-life battery 29 for supplying the electronic unit, which constitutes the microprocessor of the meter.

The electronic unit 27 is provided with a display 30, which is visible through the transparent front wall 31 of the outer housing.

When a tap-off is commenced by opening of the faucet 2, warm water flows through the conduit 1, whereby a drop of pressure is produced across the narrowed portion 4 of the Venturi tube. The drop of pressure produces a by-pass flow through the tube 18, the sleeve 20, the inlet tube 21, into the calorimeter and back through the tube 19. Since the water flowing into the calorimeter flows immediately past the cap 22, the sensor 23, being in contact with the cap 22, will very soon reach a temperature which is practically equal to the temperature of the water flowing through the conduit. The temperature assumed by the sensor 23 will in the following be referred to as the water temperature TV.

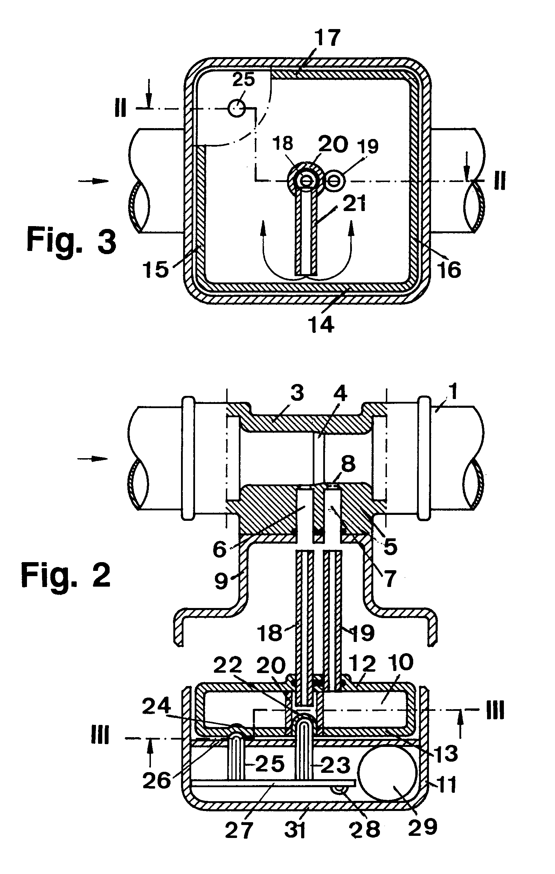

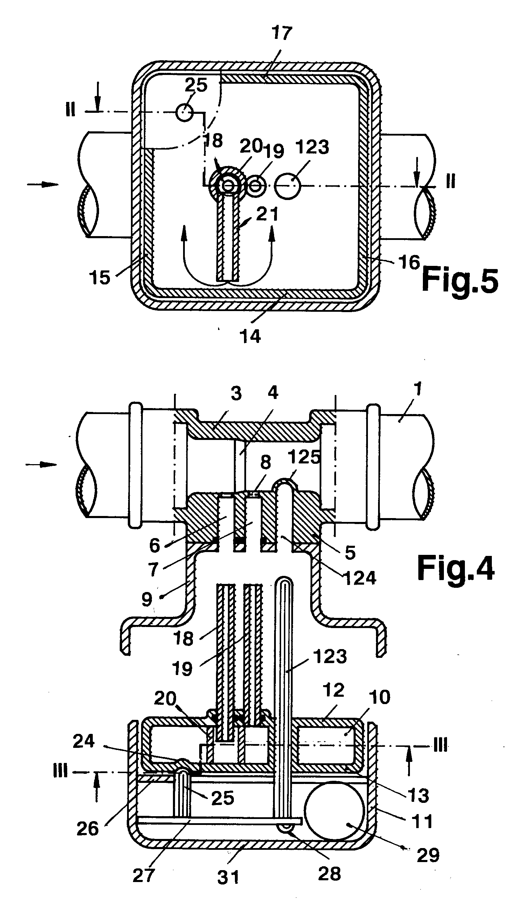

The meter shown in Figs. 4 and 5 differs from that shown in Figs. 2 and 3 in that instead of the sensor 23 for the water temperature TV provided in the inlet of the calorimeter, a sensor 123 is used which extends through the calorimeter and further back parallel to the tubes 18 and 19, so that its end is introduced into a bore 124 in the thickened tube wall 5, at the inner end of which there is provided a highly heat conducting cap 125, so that the sensor is in heat conducting connection with the main flow through the conduit and thus directly senses the water temperature TV of the main flow.

In both embodiments the water is conducted through the inlet tube 21 and further towards the bottom wall 14 of the calorimeter, from where it tends to rise under the thermo-siphon effect and thereby displaces the colder water in the calorimeter out through the tube 19 and back to the Venturi tube. However, the warming up of the total mass of water in the calorimeter takes some time, and the temperature of the sensor 25, which is in contact with the calorimeter wall, therefore rises at a delay relative to the temperature of the sensor 23 or 123. The temperature of the sensor 25 will in the following be referred to as the calorimeter temperature TK. If the flow through the conduit 1 continues long enough at unchanged rate, the calorimeter temperature TK will eventually arrive at a state of equilibrium. From the point of view of measuring technique, this temperature equilibrium or temperature stagnation is deemed to have been reached when, within one period of the sampling that takes place to survey the development of the temperatures, the rise of the calorimeter temperature has not exceeded a threshold value, which may e.g. be set at $0.2\,^{\circ}C$, and temperature stagnation is deemed to remain as long as the changes of the calorimeter temperature keep within the said threshold value, upwards or downwards.

Preferably, the passage areas of the tubes 18 and 19 are selected so narrow, that at a normal tap-off pattern of a consumer, e.g. at the filling of a bath tub, a state of equilibrium of the calorimeter temperature is not reached. For tap-offs within this limit the rise of the calorimeter temperature will be uniquely determined by the quantity of water flowing through the conduit and the water temperature, and conversely, the quantity of water can be uniquely calculated from the rise of the calorimeter temperature, and the water temperature.

It has been found that the mass of the tapped-off water can be determined from the equation

$$(1) \qquad M = k1 \left( \frac{1}{\ln (TV - TKu) - \ln (TK - TKu)} \right)^{n1}$$

where TKu is the starting temperature of the calorimeter, at which the tap-off was commenced, while k1 and n1 are apparatus constants. ln means the natural logarithm.

The quantity of heat that has been consumed for heating the water from a cold water supply temperature To, which can be assumed to be constant, and may e.g. in Denmark be set at $8\,^{\circ}C$, will consequently be

$$(2) \qquad Q = M \cdot c \cdot (TV - To),$$

where c is a constant.

If a tap-off is continued so long that equilibrium of the calorimeter temperature is reached, the quantity of water thereafter flowing through the conduit can be calculated from the fact that the quantity of heat dissipated from the calorimeter to the surroundings in each sampling period will now be equal to the quantity of energy which the calorimeter receives from the water flowing through the conduit. It has been found that the quantity of heat flowing through the conduit can be calculated from the equation

$$(3) \qquad m = k2 \left( \frac{1}{\ln (TV - TY) - \ln (TK - TY)} \right)^{n2}$$

where TY is the temperature of the outer surroundings.

For each sampling period, the energy consumed for heating the tapped-off water from the cold water supply temperature to the tap-off temperature will consequently be

$$(4) \qquad q = m \cdot c \cdot (TV - To),$$

where k2 and n2 are apparatus constants different from k1 and n1. Thus it will be realized that in this case the calculation of the quantity of energy takes place for each sampling, whereas the calculation according to the equations (1) and (2) may extend over a plurality of sampling periods.

The numerical value of the power figues n1 and n2 and the values of the constants k1 and k2 can be determined by experiment. However, the constants k1 and k2 can be chosen arbitrarily, though in correct mutual proportion, if it is not intended that the meter shall directly show the quantity of energy consumed, but rather a proportionality figure that can be used as a basis for a distribution of the warm water expenses on the individual consumers in a central warm water supply system.

The invention is not bound to the formulae (1), (2) and (3), (4), respectively, but these may conceivably be replaced by other formulae which will be reasonably representative, or even more representative. The possibility also exists of employing empirically established functions which are read into a memory of the microprocessor.

When the meter is so constructed, as previously explained, that temperature equilibrium cannot be expected to occur during normal tap-off sequences, this can also be expressed as an indication to the effect that the calorimeter has a great heat inertia, and it therefore becomes possible to perform samplings at a low frequency, e.g. one sampling per minute.

At a warm water tap-off of short duration it may occur that the water temperature TV rises substantially, e.g. beyond a threshold value of 5°C, within a sampling period, but the calorimeter temperature TK does not proceed to rise perceptibly, or at any rate not beyond the stagnation limit. If the tapped-off quantity of water is so small that at the time of the next following sampling the calorimeter temperature still has not risen beyond the stagnation value relative to the value sensed at the preceding sampling, or has even dropped, the heat consumption for the short-time tap-off will not be counted.

According to the invention, a counting increment for such short-time tap-offs may be included in the metering total on the basis of the following consideration:

If the greatest quantity of water, which at an increase of the water temperature beyond the threshold value cannot cause the calorimeter temperature to rise beyond the stagnation value in the course of two successive sampling intervals, is denoted as Ms, it will be reasonable to assume that the quantity of water in short-time tap-offs will on an average amount to $\frac{1}{2}$ Ms. The heat consumption for a short-time tap-off will consequently be

$$(5) \qquad Qs = \tfrac{1}{2} \cdot Ms \cdot (TV - To) \cdot c.$$

Ms can for a given meter be determined once and for all by a measuring set-up and is thus an apparatus constant.

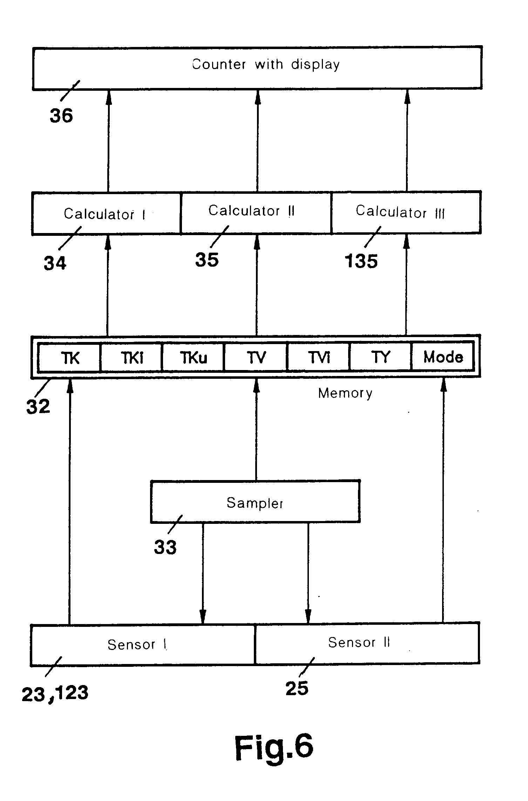

For surveying the development of the temperatures and carrying out calculations according to the above equations (2) and (4), and if desired also (5), the microprocessor has a modular build-up symbolically illustrated in the block diagram of Fig. 6.

In Fig. 6, 32 represents a memory having positions for the following data:

TK =    the calorimeter temperature measured in the current sampling cycle,

TKi =    the calorimeter temperature measured in the preceding sampling cycle,

TKu =    the calorimeter temperature at the commencement of a rise of temperature beyond the stagnation limit,

TV =    the water temperature measured in the current sampling cycle,

TVi =    the water temperature measured in the preceding sampling cycle,

TY =    the temperature of the outer surroundings,

Mode =    the main route to be followed by the microprocessor in the execution of the next following sampling cycle, viz. a first main route, Mode = 1, for increasing calorimeter temperatuture, a second main route, Mode = 2, for stagnating or dropping calorimeter temperature, and, if desired, a third main route, Mode = 3, for the above defined brief tap-offs of warm water.

23, 123 is the previously described sensor for the water temperature TV, here indicated as sensor I.

25 is the previously described sensor for the calorimeter temperature, here indicated as sensor II.

33 is a sampler, which e.g. once per minute transmits a sampling signal both directly to the memory 32 and indirectly by way of the sensors to the same.

34 is a calculator, here indicated as calculator I, adapted to calculate counting increments according to equations (1) and (2), and 35 is a calculator, here indicated as calculator II, adapted to carry out calculations according to equations (3) and (4). Moreover, a third calculator 134 is shown, here indicated as calculator III, which is employed, if it is desired to include a counting increment from brief tap-offs according to equation (5).

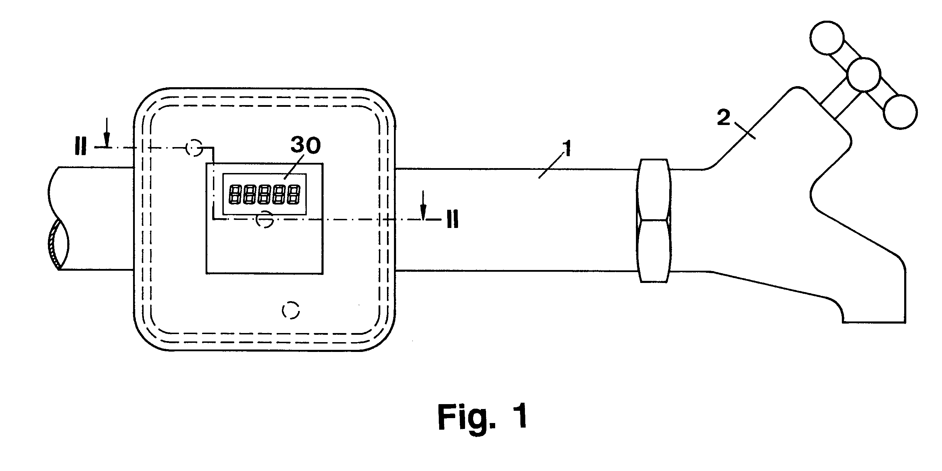

The counting increments calculated by the calculators I and II, and where applicable III, are transferred to a counter 36 with display, cf. 30 in Fig. 1.

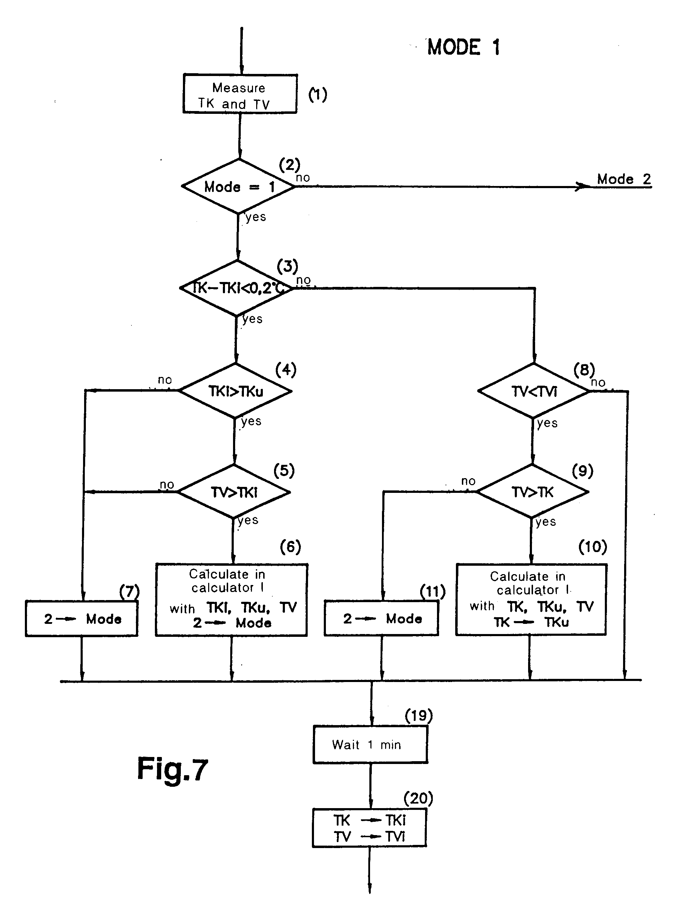

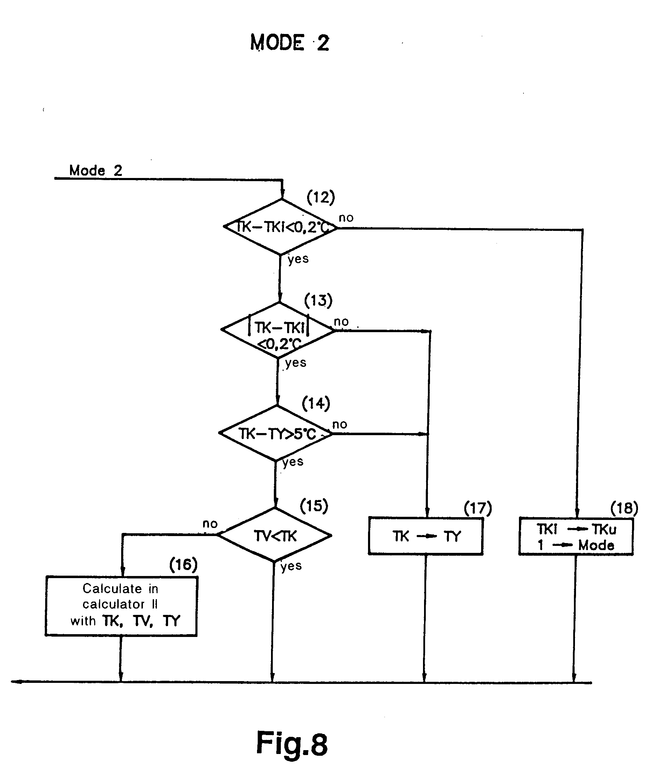

An embodiment of the appurtenant programmed control for a meter with the two calculators I and II is illustrated in the form of a flowchart in Figs. 7 and 8, when these are placed side by side.

The transactions indicated in dthe diagram by arrows are to be read as meaning that the value stated before the arrow, which may be a measured value or a value stored beforehand in a memory position, is to be entered into the memory position stated after the arrow. Similarly, e.g., 2 → Mode (points (7) and (11)) means that the value 2 is to be entered into the memory position Mode for controlling the route to be followed in the next sampling cycle. "Measure TK and TV" (point 1) means that these temperatures are to be sensed by the sensors 25 and 23 (123) and entered into the corresponding positions of the memory. "Mode = 1" in point (2) is to be understood as meaning: Does the value 1 stand in the memory position Mode? In all other checkpoints comparisons of temperatures are stated, which can be answered by Yes or No. The interval between successive sampling cycles is assumed to be = 1 minute.

It will be seen that this programmed control will result in measurements in accordance with the principles previously explained, and only a few additional comments will be made in the following.

Some safety checks have been included, particularly points (4) and (14) against transgression of the operational limits of the calculators in certain extreme situations, which are at least theoretically conceivable.

Moreover, measures have been taken to cope with the possibility that the warm water temperature may drop during a tap-off. If this happens while the calorimeter temperature is rising, the microprocessor is directed in point (8) to perform a calculation in calculator I in each sampling cycle, each time with the new water temperature and with the calorimeter temperature latest sensed as the starting point of the rise of temperature. If the water temperature drops below the calorimeter temperature, calculator I is switched off in points (5) and (9), and calculator II in point (15).

The temperature of the outer surroundings, TY, is measured by simulation as follows: When the calorimeter temperature is decreasing, its value is in each sampling cycle entered into the memory instead of the value in the preceding sampling cycle, so that TY will eventually become equal to the lowest temperature that TK has assumed since the latest previous tap-off.

Instead of the described simulated measurement of TY it is, however, also possible to perform a direct measurement of a reference temperature TR, which is representative of TY, by means of the third sensor 28 shown in Fig. 2. Since this sensor is located in a fixed position in the heat diffusion field from the calorimeter to the outer surroundings, it assumes a temperature determined by the equation

(6)     TK - TY = k4 (TK-TR),

whence

(7)     TY = TK - k4 (TK-TR),

where k4 is an apparatus constant.

When the third sensor 28 is employed, TR is picked up in each sampling cycle. TY may now each time be calculated from the above equation and be entered into the memory, or alternatively TR may be entered into the memory, and equation (3) for calculation in calculator II may be changed by inserting TY from equation (7).

The required adaptations of the flow-chart will be obvious.

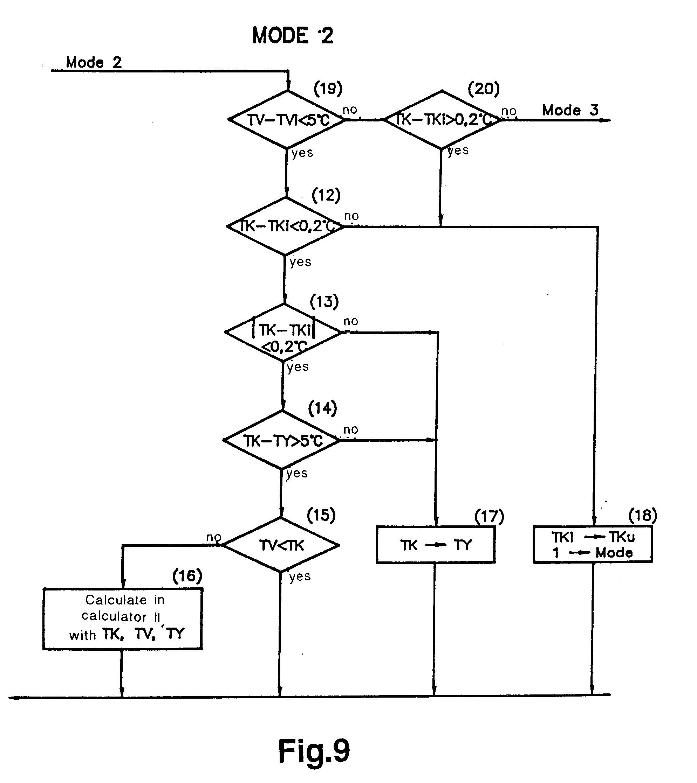

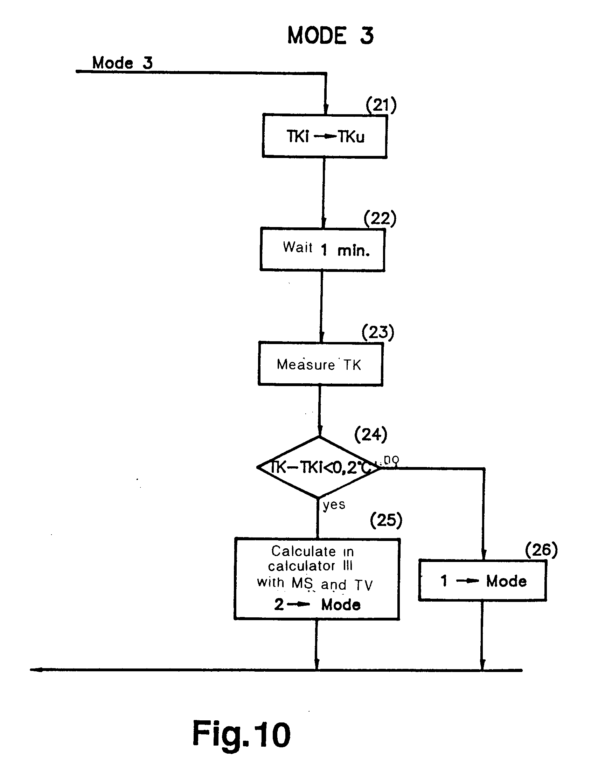

Figs. 9 and 10, when placed side by side with Fig. 7, illustrate a programmed control for a meter with three calculators I, II and III.

Mode 1 is the same as previously. In the first check in Mode 2, viz. point (19), it is checked whether the water temperature has risen less than 5°C since the preceding sampling cycle. If the answer is Yes, there has been no brief tap-off with a rise of temperature beyond the threshold of rise, and the control therefore proceeds to point (13) and further on as in the previously described Mode 2.

If the answer in point (19) is No, it is checked in point (20) whether the calorimeter temperature has risen beyond the stagnation limit. If the answer is Yes, this means that the tapped-off quantity of water is not so small that it escapes calculation in calculator I, and the control therefore proceeds to point (18) in the previously described Mode 2. If, on the contrary, the answer in point (20) is no, the control proceeds to Mode 3, where the calorimeter temperatur TKi in the preceding sampling cycle is entered as starting value for a rise of calorimeter temperature. Now, the next sampling pulse is awaited in point (22), and in point (23) TK is measured, whereafter it is checked in point (24) whether the calorimeter temperature still has not risen beyond the stagnation limit. If it has not, the tapped-off quantity of water has been so small that the heat consumption cannot be included in a calculation in calculator I, and therefore, in point (25), a calculation is effected in calculator III in accordance with equation (5). If, on the contrary, in point (24) the calorimeter temperature has risen above the stagnation limit, this rise can be included in a calculation in calculator I, and in point (26) the control is therefore shifted over to Mode 1.

7

**Claims**

1. Warm water consumption meter comprising a measuring body (10) which is so connected with a warm water conduit (1) that when warm water flows through the warm water conduit (1) different temperatures will occur in different points of the measuring body (10), said temperatures being sensed by means of thermosensors (23,123; 25) and being applied to a microprocessor (27) for calculating a heat consumption figure, characterized in that the measuring body comprises a calorimeter (10) which is connected in a by-pass conduit (18,19) branched off from the warm water conduit (1) so as to establish a by-pass flow of water through the calorimeter (20) proportional to the main flow in the warm water conduit (1), and is provided with a first sensor (23, 123) sensing the water temperature of the water flowing to the calorimeter (10), and a second sensor (25) sensing the calorimeter temperature at a point of the wall of the calorimeter (10), and that the microprocessor (27) comprises a first calculator (34) which is adapted, in response to an increase of the calorimeter temperature from a starting value to a stop value, followed by a drop of temperature or temperature stagnation, to calculate a counting increment from the starting value of the calorimeter temperature, the stop value of the calorimeter temperature, and the water temperature, and to transfer that increment to a counter (36), the by-pass conduit (18,19) and the calorimeter (10) being so dimensioned that when a quantity of water less than a predetermined quantity limit flows through the warm water conduit (1), the calorimeter temperature will not come to a point of stagnation, the quantity limit being preferably so selected that it cannot be expected to be exceeded at a normal tap-off pattern of a consumer.

2. Warm water consumption meter according to claim 1, characterized in that the microprocessor (27) comprises a sampler (33) which is adapted to sample the sensed temperatures at a predetermined rhythm and to enter these temperatures temporarily and exchangeably in a memory (32) and to transfer data from the memory (32) to said first calculator (34) in accordance with a program recorded in the microprocessor (27).

3. Warm water consumption meter according to claim 2, characterized in that the microprocessor (27) further comprises a second calculator (35) which is adapted, at stagnating calorimeter temperature following a rise of that temperature, to calculate a counting increment for each sampling period from the calorimeter temperature, the water temperature and the ambient temperature.

4. Warm water consumption meter according to claim 3, characterized in that the microprocessor (27) is adapted to shift from the first (34) to the second (35) calculator at stagnation of the calorimeter temperature following a rise, and to shift back to the first calculator (34) when the calorimeter temperature rises following a stagnation or a drop.

5. Warm water consumption meter according to claim 2, characterized in that the microprocessor (27) further comprises a third calculator (135), which is adapted, for a sampling period with increase of the water temperature beyond a predetermined threshold of increase, but stagnating calorimeter temperature, to calculate a counting increment depending only on the water temperature.

6. Warm water consumption meter according to claim 1, characterized in that the first sensor (123) is arranged in heat conducting contact with the main flow in or adjacent the region in which the by-pass flow is branched off.

7. Warm water consumption meter according to claim 3, characterized in that it comprises a third temperature sensor (28) for sensing a reference temperature representative of the ambient temperature, said third temperature sensor (28) being arranged at a distance from the calorimeter (10) inside an outer enclosure (11) covering the front side of the calorimeter (10).

8. Warm water consumption meter according to claim 7, characterized in that the microprocessor (27) is arranged inside said enclosure (11).

9. Warm water consumption meter according to claim 1, characterized in that the calorimeter (10) is arranged in such a manner as to be heat insulated from the warm water conduit (1,4), and that also the walls of the by-pass passages (18,19) connecting the calorimeter (10) with the warm water conduit (1,4) consist of heat insulating material.

10. Warm water consumption meter according to claim 9, characterized in that the calorimeter (10), the by-pass passages (18,19), and the sensors (23,25) are built together with the outer enclosure (11) to form a unit adapted to be mounted on the warm water conduit (1,4), the latter being provided at the measuring location with bores (6,7) for receiving the by-pass passages (18,19).

11. Warm water consumption meter as in claims 6 and 10, characterized in that the warm water conduit additionally has a bore (124) for receiving the first sensor (123), said bore being closed by a highly heat conducting cap (125) receiving the end of the sensor (123).

**Patentansprüche**

1. Warmwasserverbrauchszähler mit einem Messkörper (10), der mit einer Warmwasserleitung (1) so verbunden ist, dass bei Strömung von Warmwasser durch die Warmwasserleitung (1) in unterschiedlichen Punkten des Messkörpers (10) unterschiedliche Temperaturen entstehen, die mit Hilfe von Thermofühlern (23,123; 25) abgefühlt werden und zur Berechnung einer Wärmeverbrauchszahl einem Mikroprozessor (27) aufgedrückt werden, dadurch gekennzeichnet, dass der Messkörper ein Kalorimeter (10) umfasst, das in einem von der Warmwasserleitung (1) abgezweigten Umlaufleitung (18,19) liegt, so dass ein zum Hauptstrom in der Warmwasserleitung (1) proportional er Teilstrom von Wasser durch das Kalorimeter (10) erzeugt wird, wobei das Kalorimeter mit einem ersten Fühler (23,123), der die Wassertemperatur des zum Kalorimeter (10) strömenden Wassers abfühlt, und einem zweiten Fühler (25), der die Kalorimetertemperatur in einem Punkt der Wand des Kalorimeters (10) abfühlt, versehen ist, und dass der Mikroprozessor (27) ein erstes Rechenwerk (34) umfasst, das dazu eingerichtet ist, bei einer Steigung der Kalorimetertemperatur von einem Anfangswert auf einen Schlusswert, von dem aus die Temperatur wieder abfällt oder stagniert, einen Zählbeitrag auf Grund des Ausgangswertes der Kalorimetertemperatur, des Schlusswertes der Kalorimetertemperatur, und der Wassertemperatur zu berechnen, und diesen Zählbeitrag auf ein Zählwerk (36) zu übertragen, und dass die Umlaufleitung (18,19) und das Kalorimeter (10) so dimensioniert sind, dass bei Durchströmung einer Wassermenge durch die Warmwasserleitung (1,4) unterhalb einer im voraus bestimmten Grenzmenge die Kalorimetertemperatur nicht zum Stagnieren kommt, wobei die Grenzmenge vorzugsweise so gewählt wird, dass erwartet werden kann, dass sie bei einem normalen Zapfverlauf bei einem Verbraucher nicht überschritten wird.

2. Warmwasserverbrauchszähler nach Anspruch 1, dadurch gekennzeichnet, dass der Mikroprozessor (27) einen Abtaster (33) umfasst, der dazu eingerichtet ist, in einem im voraus bestimmten Takt die abgefühlten Temperaturen abzutasten, und diese Temperaturen einstweilen und austauschbar in ein Datenlager (32) einzusetzen, sowie in Übereinstimmung mit einem dem Mikroprozessor eingegebenen Programm die Daten vom Lager (32) auf das Rechenwerk (34) zu übertragen.

3. Warmwasserverbrauchszähler nach Anspruch 2, dadurch gekennzeichnet, dass der Mikroprozessor ferner ein zweites Rechenwerk (35) umfasst, das dazu eingerichtet ist, bei stagnierender Kalorimetertemperatur nach einer Steigung derselben einen Zählbeitrag für jede Abtasteperiode auf Grund der Kalorimetertemperatur, der Wassertemperatur und der Temperatur der Umgebungen zu berechnen.

4. Warmwasserverbrauchszähler nach Anspruch 3, dadurch gekennzeichnet, dass der Mikroprozessor (27) dazu eingerichtet ist, von dem ersten (34) auf das zweite (35) Rechenwerk bei Stagnation der Kalorimetertemperatur nach einer Steigung derselben umzustellen und auf das erste Rechenwerk (34) rückzustellen, wenn die Kalorimetertemperatur nach einer Stagnation oder einem Gefälle steigt.

5. Warmwasserverbrauchszähler nach Anspruch 2, dadurch gekennzeichnet, dass der Mikroprozessor (27) ferner ein drittes Rechenwerk (135) umfasst, das dazu eingerichtet ist, für eine Abtasteperiode mit Steigung der Wassertemperatur über eine im voraus bestimmte Steigungsschwelle hinaus, aber mit stagnierender Kalorimetertemperatur, einen Zählbeitrag, der nur von der Wassertemperatur abhängig ist, zu berechnen.

6. Warmwasserverbrauchszähler nach Anspruch 1, dadurch gekennzeichnet, dass der erste Fühler (123) in wärmeleitendem Kontakt mit dem Hauptstrom in oder in der Nähe von dem Gebiet angebracht ist, wo der Teilstrom a bgezweigt wird.

**7.** Warmwasserverbrauchszähler nach Anspruch 3, dadurch gekennzeichnet, dass er zur Abfühlung einer Bezugstemperatur, die für die Temperatur der Umgebungen repräsentativ ist, einen dritten Temperaturfühler (28) umfasst, der in Abstand von dem Kalorimeter innerhalb einer äusseren Hülle (11), die die Vorderseite des Kalorimeters deckt, angebracht ist.

**8.** Warmwasserverbrauchszähler nach Anspruch 7, dadurch gekennzeichnet, dass der Mikroprozessor (27) innerhalb der genannten Hülle (11) angebracht ist.

**9.** Warmwasserverbrauchszähler nach Anspruch 1, dadurch gekennzeichnet, dass das Kalorimeter (10) von der Warmwasserleitung (1, 4) wärmeisoliert angebracht ist, und dass auch die Wände der Teilstromskanäle (18,19), die das Kalorimeter (10) mit der Warmwasserleitung (1,4) verbinden, aus einem wärmeisolierenden Werkstoff bestehen.

**10.** Warmwasserverbrauchszähler nach Anspruch 9, dadurch gekennzeichnet, dass das Kalorimeter (10), die Teilstromskanäle (18,19) und die Fühler (23,25) mit der äusseren Hülle (11) zur Bildung einer Einheit zusammengebaut sind, die auf die Warmwasserleitung (1,4) angebracht werden kann, indem diese an der Messstelle Bohrungen (6,7) hat, in die die Teilstromskanäle (18,19) eingeschoben werden können.

**11.** Warmwasserverbrauchszähler nach den Ansprüchen 6 und 10, dadurch gekennzeichnet, dass die Warmwasserleitung ferner eine Bohrung (124) für die Aufnahme des ersten Fühlers (123) hat, welche Bohrung mit einer gut wärmeleitenden Kappe (125) geschlossen ist, die das Ende des Fühlers (123) aufnimmt.

**Revendications**

**1.** Compteur de consommation d'eau chaude, comportant un corps de mesure (10) qui est connecté à une conduite d'eau chaude (1) de telle manière que, lorsque l'eau chaude traverse la conduite d'eau chaude (1), des températures différentes se produisent en différents points du corps de mesure (10), lesdites températures étant détectées au moyen de thermodétecteurs (23,123; 25) et étant appliquées à un microprocesseur (27) pour calculer un nombre de consommation de chaleur, caractérisé en ce que le corps de mesure comporte un calorimètre (10) qui est monté dans une conduite de dérivation (18,19) branchée sur la conduite d'eau chaude (1) de manière à établir un écoulement d'eau de dérivation à travers le calorimètre (10) proportionnel à l'écoulement principal dans la conduite d'eau chaude (1), et est pourvu d'un premier détecteur (23, 123) détectant la température d'eau de l'eau circulant vers le calorimètre (10), et d'un second détecteur (25) détectant la température du calorimètre en un point de la paroi du calorimètre (10), et en ce que le microprocesseur (27) comporte un premier calculateur (34) qui est agencé, en réponse à une augmentation de la température du calorimètre à partir d'une valeur de départ jusqu'à une valeur d'arrêt, suivie par une chute de température ou une stagnation de température, pour calculer un incrément de comptage à partir de la valeur de départ de la température du calorimètre, la valeur d'arrêt de la température du calorimètre et la température de l'eau, et pour transférer cet incrément à un compteur (36), la conduite de dérivation (18, 19) et le calorimètre (10) étant dimensionnés de telle manière que, lorsqu'une quantité d'eau inférieure à une limite de quantité prédéterminée traverse la conduite d'eau chaude (1), la température du calorimètre n'arrive pas à un point de stagnation, la limite de quantité étant de préférence choisie de telle manière qu'on ne puisse pas s'attendre à ce qu'elle soit dépassée par un mode normal de puisage de l'utilisateur.

**2.** Compteur de consommation d'eau chaude selon la revendication 1, caractérisé en ce que le microprocesseur (27) comporte un échantillonneur (33) qui est agencé pour échantillonner les températures détectées à un rythme prédéterminé et pour faire entrer ces températures de manière temporaire et échangeable dans une mémoire (32) et pour transférer les données de la mémoire (32) audit premier calculateur (34) conformément à un programme enregistré dans le microprocesseur (27).

**3.** Compteur de consommation d'eau chaude selon la revendication 2, caractérisé en ce que le microprocesseur (27) comporte au surplus un second calculateur (35) qui est agencé, pour une température stagnante du calorimètre suivie d'une augmentation de cette température, pour calculer un incrément de comptage pour chaque période d'échantillonnage à partir de la température du calorimètre, de la température de l'eau et de la température ambiante.

4. Compteur de consommation d'eau chaude selon la revendication 3, caractérisé en ce que le microprocesseur (27) est agencé pour passer du premier (34) au second (35) calculateur lors de la stagnation de la température du calorimètre suivie d'une augmentation, et pour revenir au premier calculateur (34) lorsque la température du calorimètre augmente à la suite d'une stagnation ou d'une baisse.

5. Compteur de consommation d'eau chaude selon la revendication 2, caractérisé en ce que le microprocesseur (27) comporte au surplus un troisième calculateur (135) qui est agencé, pour une période d'échantillonnage avec augmentation de la température de l'eau au-delà d'un seuil prédéterminé d'augmentation, mais pour une température stagnante du calorimètre, pour calculer un incrément de comptage dépendant seulement de la température de l'eau.

6. Compteur de consommation d'eau chaude selon la revendication 1, caractérisé en ce que le premier détecteur (123) est agencé en contact de conduction thermique avec l'écoulement principal intérieurement ou en adjacence à la région dans laquelle le courant de dérivation est dérivé.

7. Compteur de consommation d'eau chaude selon la revendication 3, caractérisé en ce qu'il comporte un troisième détecteur de température (28) pour détecter une température de référence représentative de la température ambiante, ledit troisème détecteur de température (28) étant disposé à distance du calorimètre (10), à l'intérieur d'une enveloppe extérieure (11) recouvrant le côté avant du calorimètre (10).

8. Compteur de consommation d'eau chaude selon la revendication 7, caractérisé en ce que le microprocesseur (27) est disposé à l'intérieur de ladite enveloppe (11).

9. Compteur de consommation d'eau chaude selon la revendication 1, caractérisé en ce que le calorimètre (10) est agencé de manière à être isolé thermiquement de la conduite d'eau chaude (1, 4), et en ce que les parois des passages de dérivation (18,19) reliant le calorimètre (10) avec la conduite d'eau chaude (1, 4) sont constituées en matériau isolant thermique.

10. Compteur de consommation d'eau chaude selon la revendication 9, caractérisé en ce que le calorimètre (10), les passages de dérivation (18, 19) et les détecteurs (23, 25) sont établis, conjointement avec l'enveloppe extérieure (11), pour former une unité agencé pour être montée sur la conduite d'eau chaude (1, 4), cette dernière comportant à l'endroit de la mesure des orifices (6, 7) pour recevoir les passages de dérivation (18, 19).

11. Compteur de consommation d'eau chaude selon les revendications 6 et 10, caractérisé en ce que la conduite d'eau chaude présente au surplus un orifice (124) pour recevoir le premier détecteur (123), ledit orifice étant fermé par un couvercle (125) fortement conducteur de la chaleur et recevant l'extrémité du détecteur (123).

**Fig. 1**

EP 0 428 524 B1

**Fig. 3**

17
25
II
18 20 19
II
21
15
16
14

**Fig. 2**

3 4 1
8
6 5
9 7
18 19
22 20 12 10
24
III
III
26 25 23 13
27 31 28 29 11

13

EP 0 428 524 B1

Fig.5

Fig.4

14

EP 0 428 524 B1

Fig.6

MODE 1

```
        │
        ▼
   ┌──────────────┐
   │   Measure    │  (1)
   │  TK  and  TV │
   └──────────────┘
        │
        ▼
      (2)
     ◇ Mode = 1 ◇ ──no──────────────────────────────► Mode 2
        │
       yes
        │
        ▼
      (3)
     ◇ TK−TKi<0,2°C ◇ ──no──────────────────────────┐
        │                                            │
       yes                                           │
        │                                            │
        ▼                                            ▼
      (4)                                          (8)
  ◇ TKi>TKu ◇ ──no──┐                        ◇ TV<TVi ◇ ──no──┐
        │           │                             │           │
       yes          │                            yes          │
        │           │                             │           │
        ▼           │                             ▼           │
      (5)           │                           (9)           │
  ◇ TV>TKi ◇──no──┤                        ◇ TV>TK ◇──no──┐  │
        │           │                             │        │  │
       yes          │                            yes       │  │
        │           │                             │        │  │
        ▼           │                             ▼        │  │
      (6)           │                          (10)        │  │
 ┌──────────────┐   │                     ┌──────────────┐ │  │
 │ Calculate in │   │  (7)                │ Calculate in │ │  │  (11)
 │  calculator I│   │ ┌──────────┐        │  calculator I│ │  │ ┌──────────┐
 │with TKi,TKu,TV│  │ │2 ─► Mode │        │with TK,TKu,TV│ │  │ │2 ─► Mode │
 │ 2 ─► Mode    │   │ └──────────┘        │  TK ─► TKu   │ │  │ └──────────┘
 └──────────────┘   │                     └──────────────┘ │  │
```

Fig.7

```
                ┌──────────────┐
                │  Wait 1 min  │  (19)
                └──────────────┘
                       │
                       ▼
                ┌──────────────┐
                │  TK ─► TKi   │  (20)
                │  TV ─► TVi   │
                └──────────────┘
                       │
                       ▼
```

16

# MODE 2

Mode 2

```
                                    (12)
                         ┌─────────────┐      no
                         │ TK−TKI<0,2°C │──────────────────────────┐
                         └─────────────┘                           │
                               │ yes                               │
                                                                   │
                                    (13)                           │
                         ┌─────────────┐   no                      │
                         │  |TK−TKi|   │────────────┐              │
                         │   <0,2°C    │            │              │
                         └─────────────┘            │              │
                               │ yes                │              │
                                                    │              │
                                    (14)            │              │
                         ┌─────────────┐  no        │              │
                         │  TK−TY>5°C  │────────┐   │              │
                         └─────────────┘        │   │              │
                               │ yes            │   │              │
                                                │   │              │
                   no               (15)        │   │              │
            ┌─────────────┌─────────────┐       │   │              │
            │             │    TV<TK     │       │   │              │
            │             └─────────────┘       │   │              │
            │                   │ yes           │   │              │
            │                                   │   │              │
     (16)   │                              (17) │   │         (18) │
┌─────────────────┐                  ┌──────────────┐   ┌──────────────────┐
│  Calculate in   │                  │   TK → TY    │   │   TKI → TKu      │
│  calculator II  │                  └──────────────┘   │   1 → Mode       │
│ with TK, TV, TY │                                      └──────────────────┘
└─────────────────┘
```

## Fig.8

# MODE 2

Mode 2

**(19)** TV−TVI<5℃ — no → **(20)** TK−TKI>0,2℃ — no → Mode 3

yes ↓      yes ↓

**(12)** TK−TKI<0,2℃ — no →

yes ↓

**(13)** |TK−TKi| <0,2℃ — no →

yes ↓

**(14)** TK−TY>5℃ — no →

yes ↓

**(15)** no ← TV<TK

yes ↓

**(16)** Calculate in calculator II with TK, TV, TY

**(17)** TK → TY

**(18)** TKI → TKu
1 → Mode

# Fig.9

# MODE 3

Mode 3

(21)

TKi → TKu

(22)

Wait 1 min.

(23)

Measure TK

(24)

TK−TKi<0,2°C    no

yes

(25)

Calculate in calculator III with MS and TV

2 → Mode

(26)

1 → Mode

# Fig.10